# NEW EUROPEAN PATENT SPECIFICATION

(11) **EP 2 512 840 B2**
(45) Date of publication and mention of the opposition decision: **25.08.2021**
(45) Mention of the grant of the patent: 17.02.2016
(21) Application number: 10837960.3
(22) Date of filing: 03.12.2010
(51) Int. Cl.: B60D 1/56, B60D 1/14, B60R 19/34

(54) **BUMPER FOR A VEHICLE**
STOSSFÄNGER FÜR EIN FAHRZEUG
PARE-CHOCS POUR UN VEHICULE

(30) Priority: 17.12.2009 SE 0901573
(43) Date of publication of application: 24.10.2012
(73) Proprietor: Gestamp HardTech AB, 971 25 Luleå (SE)
(72) Inventor: TANSKANEN, Michael, SE-94534 Rosvik (SE)
(74) Representative: Roth, Sebastian
(86) International application number: PCT/SE2010/000281
(87) International publication number: WO 2011/075031

(56) References cited:
- EP-A1- 1 361 082
- EP-A1- 1 361 082
- EP-A2- 1 736 369
- DE-A1-102004 056 249
- DE-A1-102004 056 249
- DE-A1-102005 056 578
- FR-A1- 2 869 263
- US-A1- 2005 067 845
- US-A1- 2006 290 150
- US-B1- 6 814 381
- Documents relating to the front bumper of the 2006 model BMW X5 E70 (public prior use OV11) shown by documents.
- Technical drawing
- B-B detail from D2
- E-E detail from D2
- EV: affidavit

## Description

### Field of the invention

The invention relates to a bumper including a bumper bar and two tapered crash boxes extending into the bumper bar and welded thereto, at least one of the crash boxes being adapted to have an attachment means for a towing eyelet.

### Background of the invention

A towing eyelet is normally only attached to one side of the car. When the crash boxes are identical and the towing eyelet is attached to one of the crash boxes, the deformation properties of this crash box are adversely affected. US 7 357 432 B2 describes a bumper of this kind in which the bumper bar has a hole to allow for the insertion of a towing eyelet into the crash box. EP 1 736 369 A2 shows the preamble of claim 1.

### Aim of the invention and brief description of the invention

One aim of the invention is to allow for the attachment of a towing eyelet in a stable manner that has no effect or a minimal effect on the deformation properties of the crash box to which it is attached. This is achieved in that one crash box has a welded-on cover and the bumper bar is supported by the crash box in that it is welded to this cover, the cover and the bumper bar having coaxial holes at an axial distance from one another adapted to receive an internally threaded sleeve welded at least to one or other of the cover and the bumper bar and forming an attachment means for a towing eyelet.

### Brief description of the drawings

**Figure 1** is a perspective view of one end of a bumper as viewed from the outside.
**Figure 2** shows the same end as viewed from inside the vehicle.
**Figure 3** is an exploded diagram corresponding to Figure 1.
**Figure 4** is a vertical section through the outer end of the bumper shown in the figures.

### Description of the illustrated embodiment of the invention

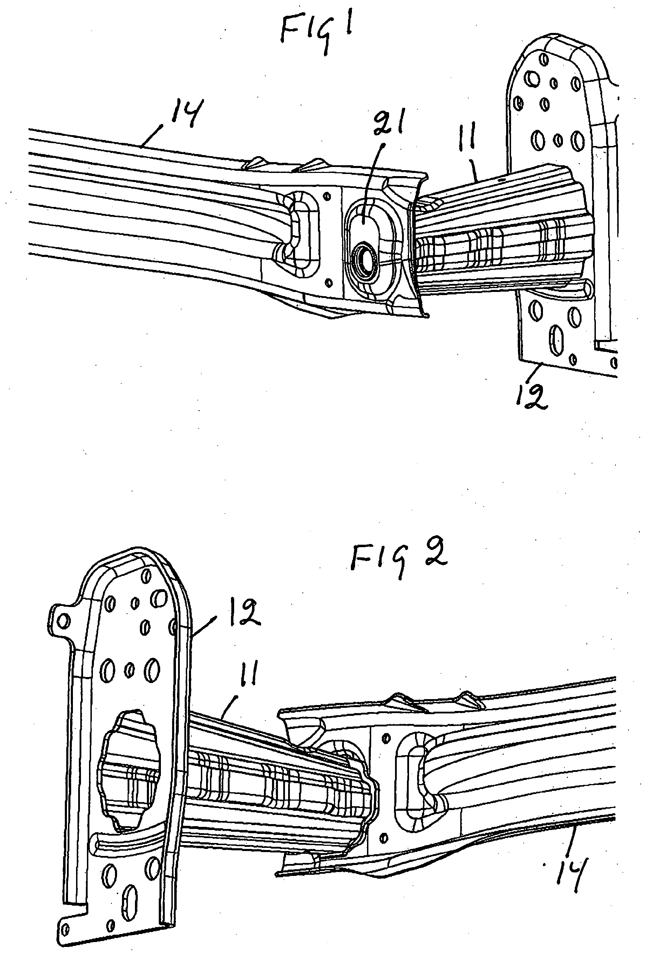

**Figures 1-3** show a tapered crash box 11 having a mounting plate 12 welded to its inner end. The crash box is made up of two parts 11a and 11b welded together to give the crash box a closed profile. The mounting plate 12 is designed to be screwed to a load-bearing part of a vehicle, usually to a side member of the vehicle. The crash box also has a mounting plate 13 welded to its outer narrow part, thereby serving as a cover. This mounting plate 13 is welded to the outer part of a bumper bar 14. The bumper is symmetrical and has an identical crash box for attachment to the other side member of the vehicle.

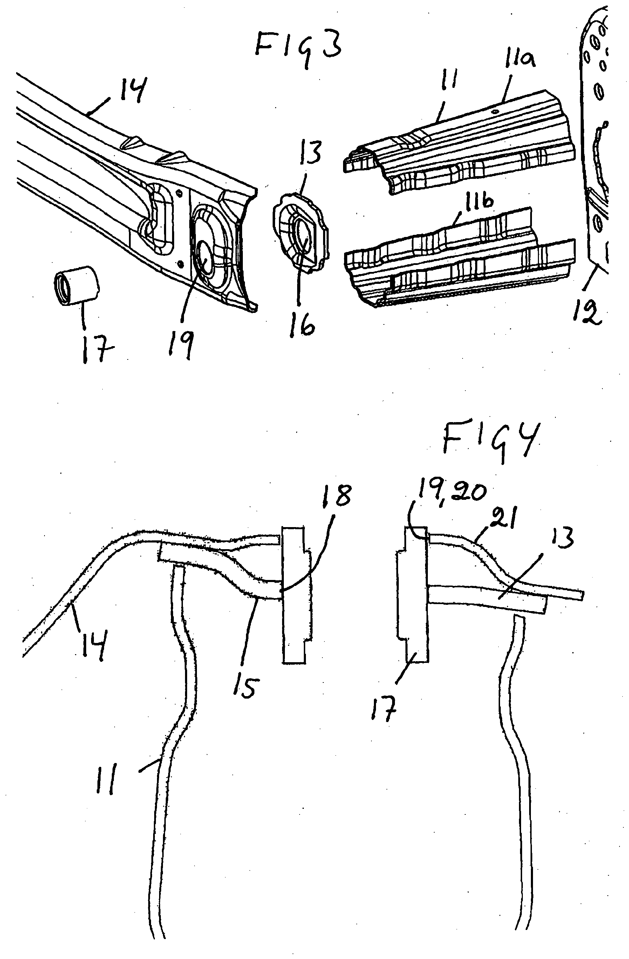

**Figure 4** shows how the mounting plate 13 has an indentation 15 with a hole 16 through which a sleeve 17 extends and is welded around the edge 18 of the hole. The sleeve extends through a hole 19 in the bumper bar 14. This hole is located in a protuberance 21 on the bumper bar. The sleeve 17 has an internal thread and a towing eyelet can be attached to the vehicle by screwing it into the sleeve 17, thereby forming a fastener for a towing eyelet which is mounted only when required. As a result of the fact that the sleeve is supported against the edge 20 of the hole 19 at an axial distance along the sleeve from the point at which it is attached to the edge 18 of the hole, the sleeve is stable even if the towing eyelet is pulled at an angle. The sleeve 17 may also be welded to the edge 20 of the hole, but this is not necessary. Alternatively, the sleeve may be welded only to the bumper bar. Neither the sleeve 17 nor the attachment thereof changes the properties of the crash box in comparison to a crash box without a sleeve. Both of the crash boxes therefore have the same deformation properties even if only one of the crash boxes is provided with a sleeve 17 and neither the sleeve nor the attachment thereof reduces the effective deformation length of the crash box.

All of the components are made of metal, preferably steel.

## Claims

1. Bumper including a bumper bar (14) and two tapered crash boxes (11) extending into the bumper bar and welded thereto, at least one of the crash boxes being adapted to have an attachment means for a towing eyelet (17),
**characterised in that**
the said one crash box (11) has a welded-on cover (13) and the bumper bar is supported by the crash box **in that** it is welded to this cover, the cover (13) and the bumper bar (14) having coaxial holes (16, 19) at an axial distance from one another adapted to receive an internally threaded sleeve (17) welded at least to one or other of the cover and the bumper bar and forming the said attachment means for a towing eyelet,
**and in that**
the cover (13) has an indentation (15) directed into the crash box in which the hole (16) of the cover is located and the bumper bar has a protuberance (21) in which the hole (16) of the bumper bar is located.

## Patentansprüche

1. Stoßfänger, der eine Stoßfängerstange (14) und zwei konische Crashboxes (11), die sich in die Stoßfängerstange erstrecken und damit verschweißt sind, umfasst, wobei mindestens eine der Crashboxes dahingehend ausgeführt ist, ein Befestigungsmittel für eine Abschleppöse (17) aufzuweisen,
**dadurch gekennzeichnet, dass**
die eine Crashbox (11) eine angeschweißte Abdeckung (13) aufweist und die Stoßfängerstange dadurch durch die Crashbox gestützt wird, dass sie mit dieser Abdeckung verschweißt ist, wobei die Abdeckung (13) und die Stoßfängerstange (14) koaxiale Öffnungen (16, 19) in einem axialen Abstand zueinander aufweisen, die zur Aufnahme einer mit einem Innengewinde versehenen Hülse (17) ausgeführt sind, die zumindest entweder mit der Abdeckung oder der Stoßfängerstange verschweißt ist und das Befestigungsmittel für eine Abschleppöse bildet,
**und dadurch, dass**
die Abdeckung (13) eine in die Crashbox gerichtete Einbuchtung (15) aufweist, in der die Öffnung (16) der Abdeckung positioniert ist, und die Stoßfängerstange einen Vorsprung (21) aufweist, in dem die Öffnung (16) der Stoßfängerstange positioniert ist.

## Revendications

1. Pare-chocs comprenant une lame de pare-chocs (14) et deux boîtes-tampons (11) effilées s'étendant dans la lame de pare-chocs et soudées à celle-ci, au moins l'une des boîtes-tampons étant conçue pour comporter un moyen de fixation pour un oeillet de remorquage (17),
**caractérisé en ce que**
ladite boîte-tampon (11) comporte un couvercle soudé (13) et la lame de pare-chocs est supportée par la boîte-tampon **en ce qu'**elle est soudée à ce couvercle, le couvercle (13) et la lame de pare-chocs (14) comportant des trous coaxiaux (16, 19) situés à une distance axiale l'un de l'autre et conçus pour recevoir un manchon à filetage interne (17) soudé au couvercle et/ou à la lame de pare-chocs et formant ledit moyen de fixation pour un oeillet de remorquage,
**et en ce que**
le couvercle (13) comporte une échancrure (15) orientée en direction de la boîte-tampon dans laquelle est situé le trou (16) du couvercle et la lame de pare-chocs comporte une protubérance (21) dans laquelle est situé le trou (16) de la lame de pare-chocs.
